# EUROPÄISCHE PATENTANMELDUNG

(11) **EP 1 452 808 A2**
(43) Veröffentlichungstag der Anmeldung: **01.09.2004**
(21) Anmeldenummer: 03450180.9
(22) Anmeldetag: 01.08.2003
(51) Int. Cl.: F25B 5/02, F25B 29/00, F24D 11/02

(54) **Kühl-und Heizanlage**

(30) Priorität: 20.02.2003 AT 1002003 U
(71) Anmelder: M-TEC Mittermayr GmbH, 4122 Arnreit 51 (AT)
(72) Erfinder: Mittermayr, Karl, 4122 Arnreit 29 (AT); Mittermayr, Klemens, 4122 Arnreit 29 (AT); Mittermayr, Dominik, 4122 Arnreit 29 (AT); Lackner, Johannes, 4171 St. Peter am Wimberg (AT)
(74) Vertreter: Wildhack, Helmut, Dipl.-Ing. Dr.

(57) **Zusammenfassung**

Es wird Kühl- und Heizanlage mit einem zumindest einen Kondensator (3), einen Kompressor (2), ein Expansionsventii (4) und einen Verdampfer (5) umfassenden Kältemittelkreislauf (1), mit einem an den Kondensator (3) angeschlossenen Heizkreis (6), mit wenigstens einer über den Verdampfer (5) kühlbaren Kühleinrichtung (13) und mit einem über einen Wärmespeicher (16) führenden, wahlweise an den Heizkreis (6) oder den Verdampfer (5) anschließbaren Speicherkreis (7), beschrieben. Um vorteilhafte Konstruktionsverhältnisse zu erlangen, wird vorgeschlagen, daß der Verdampfer (5) zumindest zwei parallel geschaltete Verdampfereinheiten (10, 11) aufweist, von denen eine den Speicherkreis (7) beaufschlagt.

## Beschreibung

Die Erfindung betrifft eine Kühl- und Heizanlage mit einem zumindest einen Kondensator, einen Kompressor, ein Expansionsventil und einen Verdampfer umfassenden Kältemittelkreislauf, mit einem an den Kondensator angeschlossenen Heizkreis, mit wenigstens einer über den Verdampfer kühlbaren Kühleinrichtung und mit einem über einen Wärmespeicher führenden, wahlweise an den Heizkreis oder den Verdampfer anschließbaren Speicherkreis.

Um bei Kühl- und Heizanlagen mit einem Kältemittelkreislauf die Heizleistung des Heizkreises im Bedarfsfalle erhöhen zu können, ohne hierzu die Kühleinrichtungen tiefer kühlen oder den Heizkreis mit einer zusätzlichen Heizanlage beaufschlagen zu müssen, ist es bekannt (DE 20 102 546 U1), einen Speicherkreis mit einem Wärmespeicher vorzusehen, mit dem der Kühlkreis zusätzlich belastet werden kann. Da damit nicht nur die Heizleistung zunimmt, sondern auch die vom Kühlkreis zu übertragende Kühlleistung ansteigt, muß zwangsweise mit einer Vereisung des Kühlkreises gerechnet werden, insbesondere dort, wo der üblicherweise verwendete Wärmeträger des Kühlkreises am nächsten dem Verdampfer kommt. Deshalb sind derartige Kühl- und Heizanlagen vergleichsweise leistungsschwach und weisen auch eine geringe Dynamik zur Abdeckung kurzfristig hoher Heiz- und/oder Kühlleistungen auf, was insbesondere eine Verwendung dieser Kühl- und Heizanlagen für Verkaufsvitrinen oder Tiefkühltruhen ausschließt. Denn dort muß trotz eines ständigen Öffnens eine nahezu gleichbleibende Kühlung der zu kühlenden Lebensmittel gewährleistet werden, was eine hohe Dynamik vom Kühlkreis fordert.

Der Erfindung liegt daher die Aufgabe zugrunde, eine Kühl- und Heizanlage der eingangs geschilderten Art zu schaffen, die sich mit einer hohen Kühl- und Heizleistung sowie durch eine hohe Dynamik in der Bereitstellung der geforderten Kühl- und/oder Heizleistung auszeichnet.

Die Erfindung löst die gestellte Aufgabe dadurch, daß der Verdampfer zumindest zwei parallel geschaltete Verdampfereinheiten aufweist, von denen eine den Speicherkreis beaufschlagt.

Weist der Verdampfer zumindest zwei parallel geschaltete Verdampfereinheiten auf, von denen eine den Speicherkreis beaufschlagt, so kann trotz eines möglichen Einfrierens des Speicherkreises eine hohe Kühlleistung zur Verfügung gestellt werden. Da im Gegensatz zum Stand der Technik die Kältebeaufschlagung der Kühleinrichtungen lediglich vom Kältemittelkreislauf abhängig ist und somit nicht von der Temperaturfestigkeit des Wärmeträgers im Kältekreis bzw. Speicherkreis begrenzt wird. Daher steht auch vorteilhaft kurzfristig eine ausreichend hohe Kühlleistung zur Verfügung, um so einem schwankenden Kühlbedarf mit einer hohen Dynamik begegnen zu können. Diese hohe Dynamik kommt auch dem Heizkreis zugute, da ja der Speicherkreis über die Verdampfereinheit den Kältemittelkreislauf beaufschlagt.

Mit dem Vorsehen zumindest eines zweiten Verdampfers mit je einem Expansionsventil und einem Kompressor im Kältemittelkreislauf, der zum ersten Verdampfer mit Expansionsventil und Kompressor parallel geschalteten ist, können mit einem Kondensator und einem Kältemittelkreislauf verschieden zu kühlende Kühleinrichtungen betrieben werden. Weil damit unabhängig voneinander beispielsweise Verkaufsvitrinen über den ersten Verdampfer und Tiefkühltruhen mit dazu vergleichsweise tieferen Kühltemperaturen über den zweiten Verdampfer beaufschlagbar sind.

Ist der Kältemittelstrom durch die Verdampfereinheiten je für sich steuerbar, so kann nicht nur der Verdampfer für den Speicherkreis vom Kältemittelkreislauf getrennt werden, um so ein Einfrieren des Speicherkreises zu verhindert, sondern auch die Kältebeaufschlagung der jeweiligen anderen Verdampfereinheiten gewählt werden.

Mit dem Regeln der Drehzahl des Kompressors in Abhängigkeit vom eingangsseitigen Saugdruck des Kältemittels sind auch Druckschwankungen ausgleichbar, die bei Änderungen in der Anzahl an Verdampfereinheiten bzw. bei Änderung der Kältemittelströme durch die Verdampfereinheiten auftreten.

In den Zeichnungen ist der Erfindungsgegenstand beispielsweise dargestellt. Es zeigen
Fig. 1 eine Kühl- und Heizanlage in einem schematischen Blockschaltbild und
Fig. 2 eine Kühl- und Heizanlage nach Fig. 1 mit einem zweiten im Kältemittelkreislauf parallel geschalteten Verdampfer.

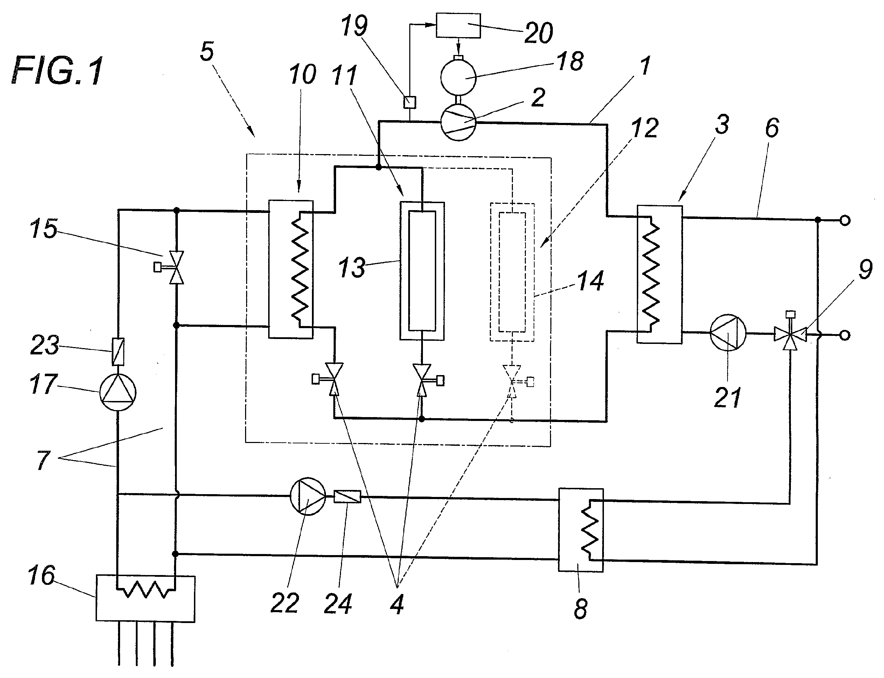

Gemäß dem dargestellten Ausführungsbeispiel einer Kühl- und Heizanlage (Fig. 1) ist in einem Kältemittelkreislauf 1 zumindest ein Kompressor 2, ein Kondensator 3, ein Expansionsventil 4 und ein Verdampfer 5 eingebunden. Im Wärmeaustausch mit dem Kondensator 3 steht ein Wärmeträger eines Heizkreises 6, der zusätzlich von einem Speicherkreis 7 beaufschlagt werden kann. Dafür ist zwischen dem Speicherkreis 7 und dem Heizkreis 6 ein Wärmetauscher 8 vorgesehen, dessen heizkreisseitiger Wärmeträgerdurchfluß von einem Dreiwegventil 9 und einer Umlaufpumpe 21 eingestellt werden kann. Beispielsweise ist dieses Dreiwegventil 9 als ein Umschaltventil zum Umschalten zwischen am Heizkreis 6 anschließbaren und nicht näher dargestellten Wärmeverbrauchern und dem Wärmetauscher 8 ausgebildet. Der Verdampfer 1 weist zumindest zwei parallel geschaltete Verdampfereinheiten 10 und 11 auf, von denen eine den Speicherkreis 7 beaufschlagt und zumindest eine andere Verdampfereinheit 11 eine Kühleinrichtung 13 kühlt. Für Verkaufsvitrinen finden beispielsweise Verdampfereinheiten 11 und 12 in Form von Lamellenverdampfern Verwendung. Der Wärmeaustausch der Verdampfereinheit 10 mit dem Wärmeträger des Speicherkreis 7 ist mit einem zur Verdampfereinheit 10 parallel geschalteten Ventil 15 regelbar. Damit kann nicht nur die Heizleistung des Heizkreises 6 geregelt, sondern auch eine geringe Beaufschlagung der Verdampfereinheit 10 eingestellt werden, um so trotz hoher Kühlleistungen eine Vereisung des Speicherkreises 7 zu vermeiden. Der Speicherkreis 7 führt über einen beispielsweise als Tiefenbohrung ausgebildeten Wärmespeicher 16 und weist zwei zum Wärmespeicher 16 parallel geschaltete Speicherkreisarme auf, wobei jeder Arm für sich von einer Umlaufpumpe 17 oder 22 mit daran anschließenden Rückschlagventil 23 oder 24 beaufschlagt wird. Der Speicherkreis 7 wird nicht nur zur Erhöhung der Heizleistung verwendet, sondern auch zur Speicherung der nicht benötigten Kühlabwärme des Heizkreis. Diese Abwärme kann dann der Kühl- und Heizanlage energiesparend für Heizzwecke wieder zur Verfügung gestellt werden.

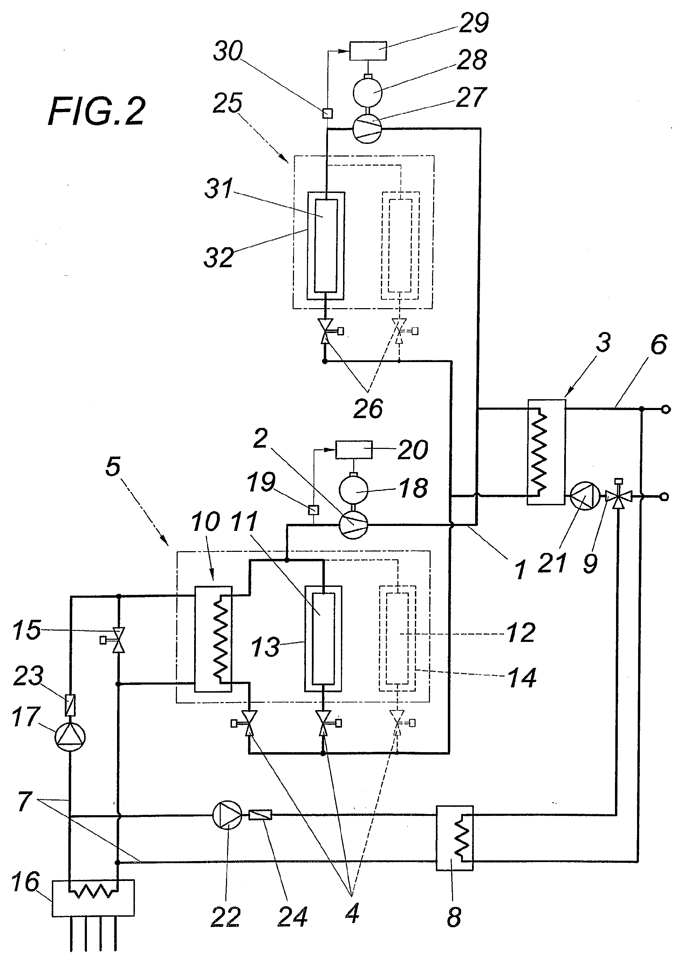

Um unterschiedlich zu kühlende Kühleinrichtungen an eine Kühl- und Heizanlage anschließen zu können (Fig. 2), ist im Kältemittelkreislauf 1 dem ersten Verdampfer 5 mit Expansionsventil 4 und Kompressor 2 zumindest ein zweiter Verdampfer 25 mit einem Expansionsventil 26 und einem Kompressor 27 parallel geschaltet. Beide Kompressoren 2 und 27 beaufschlagen gemeinsam einen Kondensator 3, womit sich die Kühlabwärme der jeweiligen Verdampfer 5 und 25 vorteilhaft für den Heizkreis 6 aufsummiert. Als ausreichend zur Erhöhung der Heizleistung hat sich herausgestellt, die vom Speicherkreis 7 beaufschlagbare Verdampfereinheit 10 lediglich an einem der Verdampfer 5 vorzusehen, insbesondere am Verdampfer 5 zu Kühlung von Verkaufsvitrinen mit einer ungefähren Kühltemperatur von minus neun Grad Celsius. Weiters besitzt der zweite Verdampfer 25 zumindest eine Verdampfereinheit 31 zum Kühlen einer Kühleinrichtung 32, beispielsweise eine Tiefkühltruhe.

Der jeweilige Kältemittelstrom durch die Verdampfereinheiten 10, 11, 12 und 31 ist je für sich mit einem regelbaren Expansionsventil 4 und 26 steuerbar, womit auch die jeweilige Kühlleistung der Verdampfereinheiten 10, 11, 12 und 31 getrennt voneinander einstellbar ist. Die Verdampfereinheiten 10, 11, 12 und 31 können aber auch vom Kältemittelstrom getrennt werden, was im Falle der vom Speicherkreis 7 beaufschlagten Verdampfereinheit 10 vor Vereisung bei niedrigen Temperaturen des Kältemittelkreislauf schützt.

Die Drehzahl des Motors 18 oder 28 für den Kompressor 2 oder 27 wird in Abhängigkeit vom eingangsseitigen Saugdruck des Kältemittels geregelt, der von einem Drucksensor 19 oder 30 im Kältemittelkreislauf gemessen wird. Eine an den Motor 18 oder 28 angeschlossene Steuereinrichtung 20 oder 29 nimmt diese Meßdaten des Drucksensors 19 oder 30 auf und gleicht über die Drehzahl des Motors 18 oder 28 Druckschwankungen im Kältemittelkreislauf 1 aus. Daher sind Schwankungen in der Kühlleistung ausgeschlossen, die beispielsweise bei Änderungen des Kältemittelstroms durch die Verdampfereinheit 10 mit gleichbleibender Kältemittelmenge im Kältemittelkreislauf 1 entstehen.

## Patentansprüche

1. Kühl- und Heizanlage mit einem zumindest einen Kondensator (3), einen Kompressor (2), ein Expansionsventil (4) und einen Verdampfer (5) umfassenden Kältemittelkreislauf (1), mit einem an den Kondensator (3) angeschlossenen Heizkreis (6), mit wenigstens einer über den Verdampfer (5) kühlbaren Kühleinrichtung (13) und mit einem über einen Wärmespeicher (16) führenden, wahlweise an den Heizkreis (6) oder den Verdampfer (5) anschließbaren Speicherkreis (7), **dadurch gekennzeichnet, daß** der Verdampfer (5) zumindest zwei parallel geschaltete Verdampfereinheiten (10, 11) aufweist, von denen eine den Speicherkreis (7) beaufschlagt.

2. Kühl- und Heizanlage nach Anspruch 1, **dadurch gekennzeichnet, daß** der Kältemittelkreislauf zum ersten Verdampfer (5) mit Expansionsventil (4) und Kompressor (2) zumindest einen zweiten parallel geschalteten Verdampfer (25) mit je einem Expansionsventil (26) und einem Kompressor (27) aufweist.

3. Kühl- und Heizanlage nach Anspruch 1 oder 2, **dadurch gekennzeichnet, daß** der Kältemittelstrom durch die Verdampfereinheiten (10, 11, 12, 31) je für sich steuerbar ist.

4. Kühl- und Heizanlage nach einem der Ansprüche 1 bis 3, **dadurch gekennzeichnet, daß** die Drehzahl des Kompressors (2, 27) in Abhängigkeit vom eingangsseitigen Saugdruck des Kältemittels regelbar ist.
